# EUROPÄISCHE PATENTSCHRIFT

(11) **EP 1 101 006 B1**
(45) Veröffentlichungstag und Bekanntmachung des Hinweises auf die Patenterteilung: **17.03.2004**
(21) Anmeldenummer: 99952238.6
(22) Anmeldetag: 03.08.1999
(51) Int. Cl.: E05B 49/00, G07C 9/00, B60R 25/00

(54) **VORRICHTUNG UND VERFAHREN FÜR EINE BERECHTIGUNGSABFRAGE IN EINEM KRAFTFAHRZEUG**
DEVICE AND METHOD FOR AUTHORIZATION INTERROGATION IN A MOTOR VEHICLE
DISPOSITIF ET PROCEDE PERMETTANT UNE INTERROGATION D'AUTORISATION DANS UN VEHICULE AUTOMOBILE

(30) Priorität: 04.08.1998 DE 19835155
(43) Veröffentlichungstag der Anmeldung: 23.05.2001
(73) Patentinhaber: ROBERT BOSCH GMBH, 70442 Stuttgart (DE)
(72) Erfinder: SCHMITZ, Stephan, D-50672 Köln (DE)
(86) Internationale Anmeldenummer: PCT/DE1999/002361
(87) Internationale Veröffentlichungsnummer: WO 2000/008280

(56) Entgegenhaltungen:
- DE-A- 3 820 248
- DE-A- 19 542 441
- DE-C- 19 718 764
- MOTOKI HIRANO ET AL: "KEYLESS ENTRY SYSTEM WITH RADIO CARD TRANSPONDER" IEEE TRANSACTIONS ON INDUSTRIAL ELECTRONICS,US,IEEE INC. NEW YORK, Bd. 35, Nr. 2, Seite 208-216 XP000096890 ISSN: 0278-0046 in der Anmeldung erwähnt

## Beschreibung

### Stand der Technik

Die Erfindung geht aus von einer Vorrichtung und einem Verfahren für eine Berechtigungsabfrage in einem Kraftfahrzeug. Aus dem Artikel "Keyless entry system with radio car transponder" von Motoki Hirano, Mikio Takeuchi, Takahisa Tomoda und Kin-Ichiro Nakano, veröffentlicht in den IEEE-transactions on industrial electronics, Vol.35, No.2, May 1988, Seite 208 bis 216, ist ein schlüsselloses Zugangssystem bekannt. Ein
vom Benutzer mitgeführter Transponder führt mit einer im Fahrzeug angeordneten Antenne einen Zugangsberechtigungsdialog aus, anhand dessen eine Zugangsberechtigung erteilt wird oder nicht. Die fahrzeugseitigen Antennen sind im Seitenspiegelgehäuse und in der hinteren Stoßstange angeordnet.

Diese Antennenanordnung führt jedoch zu einem erhöhten Verkabelungsaufwand, da eine Datenverbindung zu dem in der Regel im Fahrgastraum angeordneten Türsteuergerät geschaffen werden muss. Die Unterbringung im Außenspiegel ermöglicht andererseits eine Abfrage des Außenraums ohne größere Dämpfung des Magnetfelds.

Aus der DE-A 195 42 441 ist weiterhin eine Antennenvorrichtung für ein Diebstahlsystem bekannt, die aus Einzelantennen besteht, die jeweils von sinusförmigen Signalen über ein Steuergerät angesteuert werden. Dadurch werden elektromagnetische Felder erzeugt, die von der geometrischen Ausbildung der Einzelantennen und von der Leistung der Signale abhängig sind und die sich gegenseitig zu einem Überlagerungsfeld überlagern. Beide Antennen werden getrennt voneinander angesteuert und befinden sich an oder in einem Fahrzeug. Zur Erkennung eines Transponders im Außenraum wird eine Einzelantenne mit maximaler Leistung betrieben, um eine maximale Reichweite eines Fragecodesignals, mit dem der Transponder angesprochen werden soll, zu erzielen. Zur Innenraumabfrage wird eine Einzelantenne jedoch mit verringerter Leistung betrieben.

Der Erfindung liegt die Aufgabe zugrunde, die Antenne nur im Innenraum günstig anzuordnen und dabei einen störungsfreien Signalaustausch mit dem Transponder zu gewährleisten. Die Erfindung wird mit den kennzeichnenden Merkmalen der unabhängigen Ansprüche gelöst.

### Vorteile der Erfindung

Die erfindungsgemäße Vorrichtung für eine Berechtigungsabfrage in einem Kraftfahrzeug weist einen Transponder auf, der im Rahmen einer Berechtigungsabfrage Daten mit einer Antennenanordnung austauscht. Die Antennenanordnung besteht aus einer linken Antennenanordnung, auf der linken Seite des Kraftfahrzeuges angeordnet, und aus einer rechten Antennenanordnung, auf der rechten Seite des Kraftfahrzeugs angeordnet. Bei einer Außenraumabfrage wird die linke Antennenanordnung mit einem Strom für die Außenraumabfrage, die rechte Antennenanordnung mit einem Strom für die Außenraumabfrage beaufschlagt. Vorzugsweise sind die Ströme der linken und der rechten Antennenanordnung unterschiedlich groß, von Null verschieden und/oder die Stromphasen zueinander invertierend gewählt. Die Antennenanordnungen sind vorzugsweise im Seitenholm hinter der rechten bzw. linken Seitentür untergebracht. Durch die räumliche Nähe der Antennenanordnung zu dem Fahrzeugschließsystem kann der Verkabelungsaufwand reduziert werden. Die unterschiedliche Wahl der Stromgröße bzw. der Stromphasen (invertierende Ansteuerung) von linker und rechter Antennenanordnung trägt zu einer eindeutigen Transpondererkennung auf einer der beiden (rechten bzw. linken) Seiten des Kraftfahrzeugs bei. Soll beispielsweise der linke Außenraum des Kraftfahrzeugs abgefragt werden, wird die linke Antennenanordnung mit einem entsprechend hohen Strom beaufschlagt. Die linke Antennenanordnung stellt die Kommunikation mit dem - in der Regel auf der linken Seite befindlichen - Transponder sicher. Die rechte Antennenanordnung hingegen wird mit einem niedrigeren Strom, invertierend bezüglich des Nutzsignals des Stroms der linken Antennenanordnung, angesteuert, um das von der linken Antennenanordnung auf die rechte Seite abgestrahlte Feld so zu kompensieren, daß ein eventuell auf der rechten Fahrzeugseite befindlicher Transponder nicht in den Signalaustausch mit der Basisstation treten kann. Dadurch lassen sich Manipulationen verringern. Außerdem ist auch eine ungewünschte Kommunikation eines auf der linken Seite befindlichen Transponders mit der rechten Antennenanordnung unterbunden. Durch die Möglichkeit dieser aktiven Störfeldkompensation kann die Sendeleistung der den gewünschten Seitenbereich abfragenden Antenne erhöht werden. Die nachteiligen Folgen auf Grund des unerwünschten Austritts der magnetischen Wellen auf der gegenüberliegenden Fahrzeugseite beeinträchtigen die Sicherheit der Berechtigungsabfrage nicht.

In einer zweckmäßigen Ausgestaltung ist vorgesehen, daß eine der in der Antennenanordnung vorgesehenen Antennen sowohl für die Außenraumabfrage als auch für eine Innenraumabfrage verwendet wird. Durch diese Doppelnutzung reduziert sich der benötigte Bauteileaufwand. Die Innenraumabfrage kann für eine Fahrberechtigungsabfrage durchgeführt werden. Die Ansteuerung der linken und rechten Antennenanordnung kann so gewählt werden, daß jede einen Halbraum des Fahrgastraums abdeckt zur Transponderkommunikation. Die Ansteuerung der beiden Antennenanordnungen für die Innenraumüberwachung erfolgt vorzugsweise sukzessive, insbesondere dann, wenn jede der Antennenanordnung den ganzen Innenraum abdeckt.

In einer zweckmäßigen Ausgestaltung besteht die Antennenanordnung aus zumindest zwei zueinander orthogonal ausgerichteten Antennen. Auf diese Art und Weise läßt sich ein rotierendes Magnetfeld erzeugen, sodaß ein Signalaustausch mit einem sich in jeder beliebigen Lage befindlichen Transponder erreicht wird.

Vorzugsweise ist die sowohl für die Innenraumabfrage als auch für die Außenraumabfrage genutzte Antenne als Ferrit-Spule ausgeführt. Auch die Verwendung einer Luftspule ist möglich. Dadurch lassen sich die für einen sicheren Datenaustausch notwendigen magnetischen Felder erzielen.

Das erfindungsgemäße Verfahren für eine Berechtigungsabfrage in einem Kraftfahrzeug frägt in einem ersten Schritt ein Bediensignal ab. In einem zweiten Schritt wird ein Stromwert zur Ansteuerung einer Antennenanordnung in Abhängigkeit von dem Bediensignal ausgewählt. In einem dritten Schritt wird die Antennenanordnung mit dem ausgewählten Stromwert zur Durchführung der Berechtigungsabfrage angesteuert. Anhand der Bediensignale läßt sich eine einfache Zuordnung der gewünschten Abfrageart, Außenraumabfrage als Zugangsberechtigung, Innenraumabfrage als Fahrberechtigung, erreichen.

Weitere zweckmäßige Weiterbildungen geben sich aus weiteren abhängigen Ansprüchen und aus der Beschreibung.

### Zeichnung

Zwei Ausführungsbeispiele der Erfindung sind in der Zeichnung dargestellt und werden im folgenden näher beschrieben.

Es zeigen die Figur 1 eine Draufsicht auf ein mit der erfindungsgemäßen Vorrichtung ausgerüstetes Kraftfahrzeug, die Figuren 2 und 3 Blockschaltbilder zweier Ausführungsbeispiele, Figur 4 einen Signalverlauf sowie Figur 5 ein Flußdiagramm des erfindungsgemäßen Verfahrens.

### Beschreibung der Ausführungsbeispiele

Auf der linken Seite eines in der Draufsicht dargestellten Kraftfahrzeugs ist zwischen linker Vorder - und Hintertür eine linke Antennenanordnung 10 untergebracht. Bei einer Außenraumabfrage des linken Außenraums gibt die linke Antennenanordnung 10 ein Antennenfeld 16 für die Außenraumabfrage links und ein zum Innenraum orientiertes Antennenfeld 14 ab. Innerhalb des Antennenfelds 16 für die Außenraumabfrage links findet sich ein Transponder 11, der in diesem Fall Signale mit der linken Antennenanordnung 10 austauscht. Das zum Innenraum orientierte Antennenfeld 14 reicht über die rechte Seite des Kraftfahrzeugs hinaus. Dieses darüberhinausreichende Feld soll durch ein Kompensationsfeld 18 für die Außenraumabfrage links, erzeugt durch eine rechte Antennenanordnung 12, egalisiert werden.

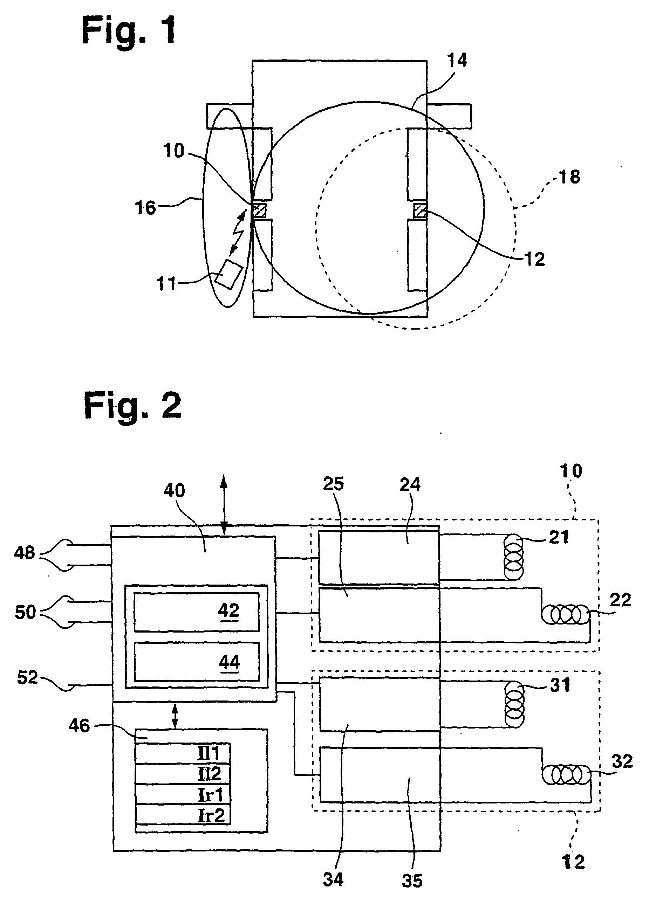

Bei dem Ausführungsbeispiel gemäß Figur 2 besteht die linke Antennenanordnung 10 aus einer ersten linken Antenne 21 und einer zweiten linken Antenne 22, die orthogonal zueinander angeordnet sind. Die erste linke Antenne 21 wird von einem Treiber 24 für die erste linke Antenne, die zweite linke Antenne 22 von einem Treiber 25 für die zweite linke Antenne angesteuert. Die rechte Antennenanordnung 12 wird von einer ersten rechten Antenne 31 und einer zweiten rechten Antenne 32, wiederum orthogonal zueinander angeordnet, mit den zugehörigen Treiber 34 für die erste Antenne rechts und einem Treiber 35 für die zweite Antenne rechts gebildet. Die Treiber 24, 25, 34, 35 tauschen Signale mit einem Controller 40 aus. In dem Controller 40 sind eine Innenraumlogik 42 und eine Außenraumlogik 44 für die Durchführung der Innenraumüberwachung und der Außenraumüberwachung vorgesehen. Der Controller 40 tauscht Signale mit einem Speicher 46 aus, in dem ein Strom Il1 der ersten linken Antenne 21, ein Strom Il2 der zweiten linken Antenne 22, ein Strom Ir1 der ersten rechten Antenne 31 und ein Strom Ir2 der zweiten rechten Antenne 33 hinterlegt sind. Als weitere Eingangsgrößen sind dem Controller 40 zwei Öffnungssignale Türen links 48, zwei Öffnungssignale Türen rechts 50 und ein Motorstartsignal 52 zugeführt.

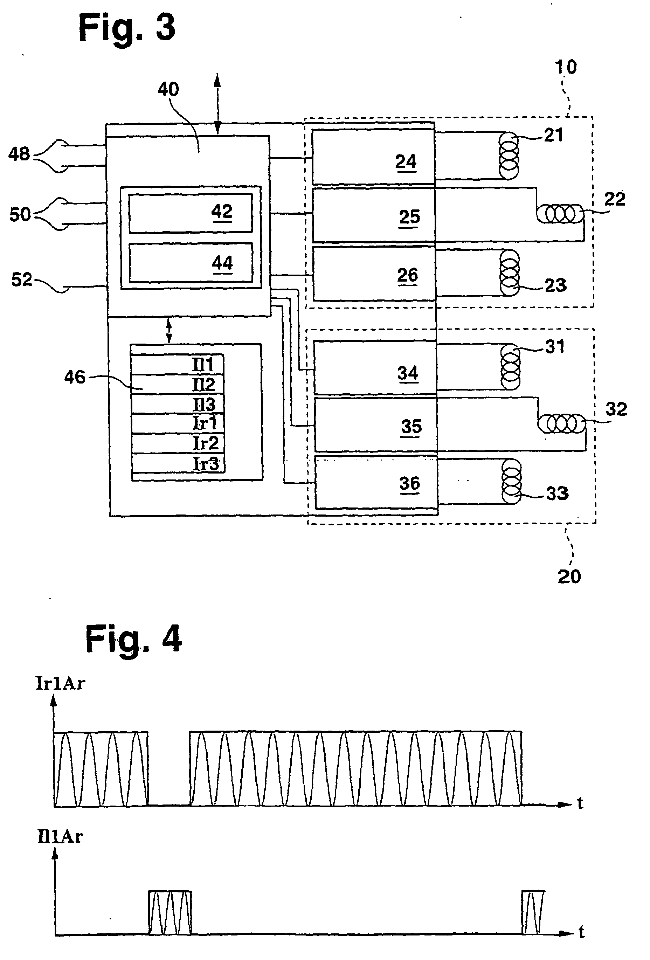

Das Ausführungsbeispiel gemäß Figur 3 unterscheidet sich von demjenigen der Figur 2 darin, daß die linke Antennenanordnung 10 um eine dritte linke Antenne 23 mit zugehörigem Treiber 26 für die dritte linke Antenne erweitert ist. Auch die rechte Antennenanordnung 12 weist eine dritte rechte Antenne 33 mit zugehörigem Treiber 36 auf. Hierzu korrespondierend sind in dem Speicher 46 zusätzlich ein Strom Il3 der dritten linken Antenne 23 und ein Strom Ir3 der dritten rechten Antenne 33 hinterlegt.

Figur 4 zeigt den zeitlichen Verlauf eines Stroms Ir1Ar der ersten rechten Antenne für die Außenraumabfrage rechts, sowie einen Stroms Il1Ar der ersten linken Antenne für die Außenraumabfrage rechts. Die Signalverläufe dieser beiden Ströme sind binär invertiert. Die skizzierten Rechtecke (Binärsignal) sind die Einhüllenden des sinusförmigen Stromverlaufs.

Linke und rechte Antennenanordnung 10, 12 sind in der sogenannten B-Säule des Kraftfahrzeugs untergebracht, die sich bei einem 4-türigen Wagen zwischen den zwei Seitentüren befindet. Zumindest eine Antenne der jeweiligen Antennenanordnung 10, 12 wird sowohl für die Innenraumabfrage als auch für die Außenraumabfrage verwendet. Beim Ausführungsbeispiel gemäß Figur 2 dienen die zwei Antennen 21, 22 beziehungsweise 31, 32 jeder Antennenanordnung 10 beziehungsweise 12 sowohl für die Innenraum- als auch für die Außenraumabfrage. Beim Ausführungsbeispiel gemäß Figur 3 sind es die zweiten Antennen 22 bzw. 32 der Antennenanordnungen 10 beziehungsweise 12, die sowohl bei der Innenraum- als auch bei der Außenraumabfrage angesteuert werden.

Bei einer Außenraumabfrage tauschen die jeweilige Antennenanordnungen 10, 12 der abgefragten Seite und der Transponder 11 Signale aus. Möchte der Fahrer in das Fahrzeug steigen, betätigt er den Türgriff auf der linken Seite. Ein entsprechendes Öffnungssignal 48 Türen links aktiviert in dem Controller 40 die entsprechende Außenraumlogik 44 zur linken Außenraumabfrage. Hierzu sendet die linke Antennenanordnung 10 über das Antennenfeld 16 für die Außenraumabfrage links ein codiertes Signal an den Transponder 11, der hierauf ein Antwortsignal an die linke Antennenanordnung 10 zurücksendet. Diese Antwort wird in einem Steuergerät, gegebenenfalls in dem Controller 40, ausgewertet und mit einer als zulässig erachteten Antwort verglichen. Bei einer Übereinstimmung wird das Schließsystem des Kraftfahrzeugs im Sinne eines Öffnens angesteuert. Der Datenaustausch zwischen Transponder 11 und Antennenanordnung 10, 12 läuft aufgrund der Sicherheitsanforderungen verschlüsselt ab, beispielsweise nach dem sogenannten Challenge-Response-Verfahren oder dem Rolling-Code-Verfahren.

Da zumindest eine Antenne der Antennenanordnungen 10, 12, sowohl für die Innenraum- als auch für die Außenraumabfrage genutzt wird, ergibt sich bei einer Ansteuerung der linken Antennenanordnung 10 für eine linke Außenraumabfrage, die in Figur 1 dargestellte Feldverteilung. Hierbei ist das sich auf der linken Fahrzeugseite befindliche Antennenfeld 16 für die Außenraumabfrage links gewünscht, nicht hingegen das zum Innenraum orientierte Antennenfeld 14, das sich auch auf die rechte Fahrzeugseite erstrecken kann. Durch die erfindungsgemäße Vorrichtung soll verhindert werden, daß das bei dieser Konstellation auf der rechten Fahrzeugseite austretende zum Innenraum orientierte Antennenfeld 14 zur Kommunikation mit einem Transponder 11, der sich auf der rechten Fahrzeugseite befindet, genutzt wird. Bei einer Außenraumabfrage links soll auch tatsächlich nur der auf der linken Seite befindliche Transponder 11 eine Zugangsberechtigung bewirken, nicht hingegen ein Transponder 11 auf der rechten Seite. Um dies zu erreichen, sendet die rechte Antennenanordnung 12 ein Störfeld 18 für die Außenraumabfrage links. Die Erzeugung dieses Störfelds 18 ist so gewählt, daß bei Überlagerung des Störfelds 18 und des zum Innenraum orientierten Antennenfelds 14 auf der rechten Seite ein resultierendes Feld entsteht, das nicht mehr die für die linke Seite typische Abfrageinformation für den Transponder 11 der linken Antennenanordnung 10 beinhaltet. Die mit dem Transponder 11 ausgetauschte Information ist in der Regel binär in Verbindung mit einem sinusförmigen Trägersignal von beispielsweise 125kHz codiert, vergleiche hierzu auch Figur 4. Diese binär kodierte Information soll auf der rechten Seite durch das Störfeld 18 so beeinflußt werden, daß dort beispielsweise ein durchgehendes Feld ohne 0/1-Wechsel zustande kommt. Hierzu ist es denkbar, die rechte Antennenanordnung 12 logisch invertierend zu dem Nutzsignal der linken Antennenanordnung 10 anzusteuern, beispielhaft dargestellt in Figur 4, sodaß bei geeigneter Wahl der Spulen-Stromamplitude (Strom Spitze-Spitze des Trägersignals) auf der rechten Seite ein durchgehendes Feld entsteht. Dadurch wird es unmöglich, einen auf der rechten Seite befindlichen Transponder 11 anzusteuern. Die rechte Antennenanordnung 12 könnte zur Erzeugung des Störfelds 18 auch im Sinne eines Rauschens oder phasenverschoben zum nutzseitigen Strom angesteuert werden. Die Stromamplituden sind in dem Speicher 46 für jede Antenne und Abfrageart hinterlegt.

Zumindest eine der Antennen der Antennenanordnungen 10, L2 wird auch für eine Innenraumabfrage genutzt. Hat der mit einem Transponder 11 versehene Benutzer Zugang zum Fahrzeug erhalten und möchte das Fahrzeug starten, betätigt er ein entsprechendes Bedienelement, um das Motorstartsignal 52 zu erzeugen. Der Controller 40 erfaßt das Motorstartsignal 52 und erkennt anhand dessen, die Innenraumlogik 42 im Sinne der Innenraumabfrage zu aktivieren. Wiederum führen die Antennenanordungen 10, 12 einen Signalaustausch mit dem sich im Innenraum befindlichen Transponder 11 durch. Sendet der Transponder 11 ein als gültig erkanntes Signal zurück, wird der Benutzer als fahrberechtigt erkannt. Die für den Betrieb des Fahrzeugs notwendigen Komponenten werden freigeschaltet. Vorzugsweise erfolgt die Ansteuerung der linken und rechten Antennenanordnungen 10, 12, die jeweils den ganzen Innenraum abdecken, nacheinander.

Bei dem Ausführungsbeispiel gemäß Figur 2 werden die ersten und zweiten Antennen 21, 31; 22, 32 sowohl für die Innenraumabfrage als auch für die Außenraumabfrage rechts/links angesteuert. Somit lassen sich für jede Antenne drei Betriebsarten unterscheiden. Für jede dieser drei Betriebsarten wird in dem Speicher 46 jeweils ein Stromwert (Spulen-Stromamplitude Spitze-Spitze) hinterlegt. Der Strom Il1 der ersten linken Antenne 21 weist somit drei Werte auf: Den Strom der linken ersten Antenne für die Außenraumabfrage links (Il1Al) den Strom der ersten linken Antenne für die Außenraumabfrage rechts (Il1Ar) und den Strom der linken ersten Antenne für die Innenraumabfrage (Il1I). Entsprechendes gilt für die weiteren Antennen 22, 31, 32. Bei der Außenraumabfrage links läuft der Signalaustausch mit dem Transponder 11 unter anderem über diese erste linke Antenne 21. Der für diese Betriebsart hinterlegte Strom Tl1Al weist einen relativ hohen Wert auf. Im der zweiten Betriebsart Außenraumabfrage rechts erzeugt die erste linke Antenne 21 ein Störfeld für die Außenraumabfrage rechts. Der entsprechende Stromwert Il1Ar ist niedriger als der für die Außenraumabfrage links zu wählen. Beispielhaft sind die entsprechenden Signalverläufe für die Außenabfrage rechts in Figur 4 dargestellt. Für die dritte Betriebsart der Innenraumabfrage muß ein Strom Il1I in der Höhe vorgegeben werden, daß der ganze Innenraum des Kraftfahrzeugs sicher erfaßt wird.

In entsprechender Weise sind die anderen Stromwerte zu hinterlegen. Für die erste rechte Antenne 31 beispielsweise ist der Strom für die Außenabfrage links Ir1Al kleiner zu wählen als der für die Außenraumabfrage rechts (Ir1Ar).

Bei dem Ausführungsbeispiel gemäß Figur 3 wird immer die zweite Antenne 22 beziehungsweise 32 sowohl für die Innenraumabfrage als auch für die Außenraumabfrage verwendet. Diese zweiten Antennen 22, 32 müssen in Übereinstimmung zu den Antennen gemäß Figur 2 wiederum drei Betriebsarten mit den zugehörigen drei Stromwerten abdecken, sodaß für jede der zweiten Antennen 22, 32 drei Stromwerte hinterlegt sind (Il2Al, Il2Ar, Il2I; Ir2Al, Ir2Ar, Ir2I). Die ersten Antennen 21, 31 werden nur für die Außenraumabfrage rechts/links genutzt, sodaß hierfür jeweils zwei Stromwerte in dem Spreicher 46 zu hinterlegen sind, einmal zur Erzeugung eines Nutzfelds, im anderen Fall zur Erzeugung eines Störfelds. Die dritten Antennen 23, 33 übernehmen in Verbindung mit den zweiten Antennen 22, 32 nur die Innenraumabfrage. Hierfür ist lediglich jeweils ein Stromwert (Ir3I, Il3I) im Speicher 46 abzulegen. Bei den ersten Antennen 21 für die Außenabfrage kann es sich um eine Luftspule handeln, die zusammen mit den zweiten Antennen 22, 32 eine sogenannte Twin-loop-Antenne bilden. Erste und zweite Antennen 21 beziehungsweise 31, 22 beziehungsweise 32 werden um 90° phasenverschoben angesteuert, sodaß ein rotierendes Magnetfeld entsteht. Als zweite Antenne 22, 32 können Ferritspulen zum Einsatz gelangen. Die Ferritspule der zweiten Antennen 22, 32 wird in der B-Säule montiert. Die dritten Antennen 23, 33 für die Innenraumabfrage sind ebenfalls Ferritantennen und können am Boden, beispielsweise am Fahrersitz, angeordnet werden.

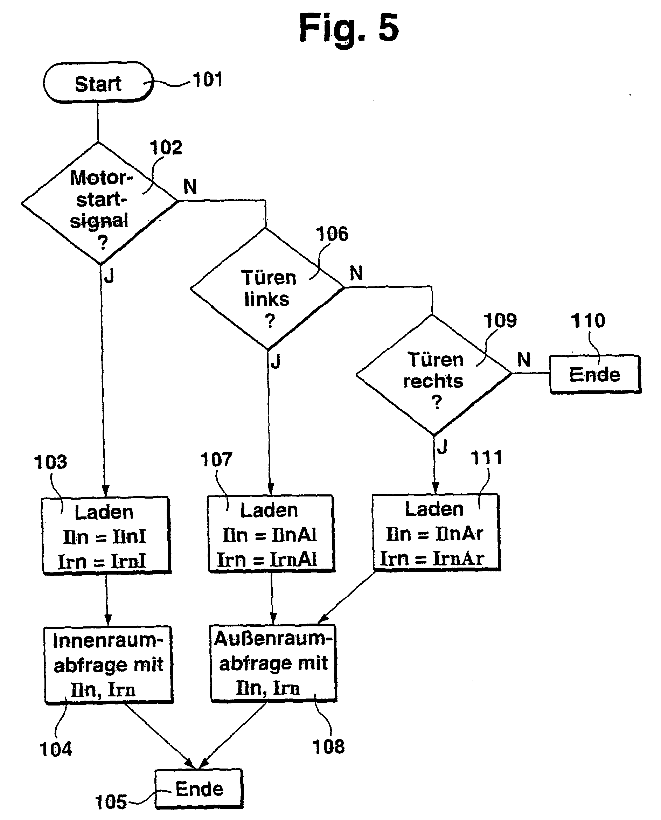

In Figur 5 wird der Ablauf der Betriebsweise einer erfindungsgemäßen Vorrichtung beschrieben. Die Abfragen werden gestartet, Schritt 101, indem der Controller einen Signalwechsel eines Eingangsignals (Öffnungssignal 48/50 Türen links/rechts, Motorstartsignal 52) erkennt. Diesen Eingangssignalen sind die drei Betriebsarten (Außenraumabfrage rechts/links, Innenraumabfrage) zuzuordnen. In der Abfrage 102 wird ermittelt, ob es sich bei dem einen Signalwechsel hervorrufenden Eingangssignal um das Motorstartsignal 52 gehandelt hat. Bejahendenfalls lädt der Controller 40 aus dem Speicher 46 die Stromansteuerwerte für die Innenraumabfrage (IlnI, IrnI), Schritt 103. Der Index n ist als Laufindex zu verstehen; für das Ausführungsbeispiel gemäß Figur 2 gilt: n=1,2; für das Ausführungsbeispiel gemäß Figur 3 gilt: n=1,2,3.

Anschließend wird die Innenraumabfrage mit den aus dem Speicher 46 geladenen Werten durchgeführt, Schritt 104.

Handelt es sich bei dem eingehenden Signal nicht um das Motorstartsignal 52, schließt sich eine Abfrage 106 an, ob die Türen links betätigt wurden. Ist dies der Fall, erkennt der Controller, daß die Außenraumabfrage links zu starten ist. Er lädt die Stromwerte für die Außenabfrage links IlnAl, IrnAl aus dem Speicher 46, Schritt 107. Falls nicht die linken Türen betätigt wurden, wird eine Betätigung der rechten Türen abgefragt, Abfrage 109. Bejahendenfalls ist die Außenraumabfrage rechts durchzuführen. Hierfür sind die entsprechenden Stromwerte IlnAr, IrnAr aus dem Speicher 46 zu laden. Mit den so gewählten Stromansteuerwerten Iln, Irn wird die Außenraumabfrage durchgeführt, Schritt 108. In Abhängigkeit von einem als zulässig erachteten Signalwechsel wird entweder eine Fahrberechtigung (bei der Innenraumabfrage) oder eine Zugangsberechtigung (bei der Außenraumabfrage) erteilt, Schritt 105.

## Patentansprüche

1. Vorrichtung für eine Berechtigungsabfrage in einem Kraftfahrzeug, mit einem Transponder (11), der im Rahmen einer Berechtigungsabfrage Daten mit einer linken Antennenanordnung (10), auf der linken Seite des Kraftfahrzeuges angeordnet, und/oder mit einer rechten Antennenanordnung (12), auf der rechten Seite des Kraftfahrzeugs angeordnet, austauscht, **dadurch gekennzeichnet, dass** bei einer Außenraumabfrage links die linke Antennenanordnung (10) mit einem Strom, IlnAl, für die Außenraumabfrage links, und die rechte Antennenanordnung (12) mit einem Strom, IrnAl, für die Außenraumabfrage links beaufschlagt ist zur Erzeugung eines Störfelds auf der rechten Außenraumseite, das den Datenaustausch mit dem Transponder (11) auf der rechten Außenraumseite verhindert.

2. Vorrichtung nach Anspruch 1 , **dadurch gekennzeichnet, daß** bei der Außenraumabfrage die linke und rechte Antennenanordnung (10, 12) so angesteuert sind, daß der Strom (IlnAl, IlnAr) der linken Antennenanordnung zum Strom (IrnAl, IrnAr) der rechten Antennenanordung (12) invertierend gewählt ist.

3. Vorrichtung nach einem der vorhergehenden Ansprüche, **dadurch gekennzeichnet, daß** zumindest eine Antenne (21, 22, 31, 32) der Antennenanordnungen (10, 12) sowohl für die Innenraumsbfrage als auch für die Außenraumabfrage verwendet.

4. Vorrichtung nach einen der vorhergehenden Ansprüche, **dadurch gekennzeichnet, daß** in Abhängigkeit von der Außenraumabfrage ein Schließsystem angesteuert ist und/oder in Abhängigkeit von der Innenraumabfrage eine Freigabe des Motorstart-Stystems erfolgt.

5. Vorrichtung nach einem der vorhergehenden Ansprüche, **dadurch gekennzeichnet, daß** zumindest eine der Antennen (21, 22, 23, 31, 32, 33) der Antennenanordnungen (10, 12) in einer an eine Seitentür angrenzenden Karosseriesäule angeordnet ist.

6. Verfahren für eine Berechtigungsabfrage in einem Kraftfahrzeug, mit einem Transponder (11), der im Rahmen einer Berechtigunsabfrage Daten mit einer auf der linken und/oder rechten seite des Kraftfahrzeugs angeordneten Antennenanordnung (10, 12) austauscht, mit folgenden Schritten:
- Abfragen eines Bediensignals (48, 50, 52),
- Auswahl eines Stromwertes, Iln, Irn, zur Ansteuerung der Antennenanordnung (10, 12) abhängig von den Bediensignal (48, 50, 52), **dadurch gekennzeichnet, dass** für die Anßenraumabfrage links bzw. rechts unterschiedliche Stromwerte, IlnAl, IrlAl, IlnAr, IrnAr, für die linke und rechte Antennenanordnung (10, 12) vorgesehen sind, und
- Ansteuerung der Antennenanordnung (10, 12) mit dem jeweils ausgewählten Stromwert, Iln, Irn, zur Durchführung der Berechtigungsabfrage für den linken oder rechten Außenraum.

## Claims

1. Device for authorization interrogation in a motor vehicle, having a transponder (11) which, within the scope of an authorization interrogation, exchanges data with a left-hand antenna array (10) arranged on the left-hand side of the motor vehicle, and/or with a right-hand antenna array (12) arranged on the right-hand side of the motor vehicle, **characterized in that** when there is an external space interrogation on the left the left-hand antenna array (10) has a current IlnAl, applied to it for the left-hand external space interrogation, and the right-hand antenna array (12) has a current, IrnAl, applied to it for the external space interrogation in order to generate an interference field on the right-hand external space side which prevents exchange of data with the transponder (11) on the right-hand external space side.

2. Device according to Claim 1, **characterized in that** when there is an external space interrogation the left-hand and right-hand antenna arrays (10, 12) are driven in such a way that the current (IlnAl, IlnAr) of the left-hand antenna array is selected in inverted form with respect to the current (IrnAl, IrnAr) of the right-hand antenna array (12).

3. Device according to one of the preceding claims, **characterized in that** at least one antenna (21, 22, 31, 32) of the antenna arrangements (10, 12) is used both for the internal space interrogation and for the external space interrogation.

4. Device according to one of the preceding claims, **characterized in that** a locking system is actuated as a function of the external space interrogation and/or the engine starting system is enabled as a function of the internal space interrogation.

5. Device according to one of the preceding claims, **characterized in that** at least one of the antennas (21, 22, 23, 31, 32, 33) of the antenna arrays (10, 12) is arranged in a bodywork pillar which adjoins a side door.

6. Method for an authorization interrogation in a motor vehicle, having a transponder (11) which, within the scope of an authorization interrogation, exchanges data with an antenna array (10, 12) which is arranged on the left-hand side and/or right-hand side of the motor vehicle, having the following steps:
- an operator control signal (48, 50, 52) is interrogated,
- a current value, Iln, Irn, for driving the antenna array (10, 12) is selected as a function of the operator control signal (48, 50, 52), **characterized in that**, for the external space interrogation, current values which are different on the left-hand and right-hand sides, IlnAl, IrlAr, IlnAr, IrnAr, are provided for the left-hand and right-hand antenna arrays (10, 12), and
- the antenna array (10, 12) is driven with the respectively selected current value, Iln, Irn, in order to carry out the authorization interrogation for the left-hand or right-hand external space.

## Revendications

1. Dispositif pour une interrogation d'habilitation dans un véhicule automobile, comprenant un transpondeur (11) qui, dans le cadre d'une interrogation d'habilitation, échange des données avec un dispositif d'antenne gauche (10), disposé sur le côté gauche du véhicule automobile et/ou avec un dispositif d'antenne droit (12), disposé sur le côté droit du véhicule automobile,
**caractérisé en ce que**
dans le cas d'une interrogation de l'espace extérieur à gauche, le dispositif d'antenne gauche (10) est chargé par un courant, IlnAl, pour l'interrogation de l'espace extérieur à gauche et le dispositif d'antenne droit (12) est chargé par un courant, IrnAl, pour l'interrogation de l'espace extérieur à gauche, pour la production d'un champ perturbateur sur le côté extérieur droit qui interdit l'échange de données avec le transpondeur (11) sur le côté de l'espace extérieur à droite.

2. Dispositif selon la revendication 1,
**caractérisé en ce que**
dans le cas d'une interrogation de l'espace extérieur, le dispositif d'antenne gauche et le dispositif d'antenne droit (10, 12) sont commandés de manière que le courant (IlnAl, IlnAr) du dispositif d'antenne gauche soit choisi à l'inverse du courant (IrnAl, IrnAr) du dispositif d'antenne droit (12).

3. Dispositif selon une des revendications précédentes,
**caractérisé en ce qu'**
au moins une antenne (21, 22, 31, 32) des dispositifs d'antennes (10, 12) est utilisée aussi bien pour l'interrogation de l'espace intérieur que pour l'interrogation de l'espace extérieur.

4. Dispositif selon une des revendications précédentes,
**caractérisé en ce qu'**
un système de fermeture est commandé en fonction de l'interrogation de l'espace extérieur et/ou un déblocage du système de démarrage du moteur s'effectue en fonction de l'interrogation de l'espace intérieur.

5. Dispositif selon une des revendications précédentes,
**caractérisé en ce qu'**
au moins une des antennes (21, 22, 23, 31, 32, 33) des dispositifs d'antennes (10, 12) est disposée dans un montant de carrosserie adjacent à une porte latérale.

6. Procédé pour une interrogation d'habilitation dans un véhicule automobile comprenant un transpondeur (11) qui, dans le cadre d'une interrogation d'habilitation, échange des données avec un dispositif d'antenne (10, 12), disposé sur le côté gauche et/ou disposé sur le côté droit du véhicule automobile, comprenant les étapes suivantes :
- interrogation d'un signal de service (48, 50, 52),
- sélection d'une valeur de courant, Iln, Irn, pour la commande du dispositif d'antenne (10, 12) en fonction du signal de service (48, 50, 52),
**caractérisé en ce que**
- pour l'interrogation de l'espace extérieur à gauche et à droite respectivement, des valeurs de courant différentes, IlnAl, IrlAl, IlnAr, IrnAr, sont prévues pour le dispositif d'antenne gauche et droit (10, 12), et
- on commande le dispositif d'antenne (10, 12) avec la valeur de courant, Iln, Irn, sélectionnée à chaque fois, pour l'exécution de l'interrogation d'habilitation pour l'espace extérieur gauche ou droit.
